# EUROPEAN PATENT SPECIFICATION

(11) **EP 2 199 718 B1**
(45) Date of publication and mention of the grant of the patent: **28.01.2015**
(21) Application number: 08425781.5
(22) Date of filing: 09.12.2008
(51) Int. Cl.: F27B 1/02, F27B 1/14, F27D 1/14, C04B 2/12

(54) **Lime kiln**
Kalkofen
Four à chaux

(43) Date of publication of application: 23.06.2010
(73) Proprietor: Cimprogetti S.p.A., 24044 Dalmine (BG) (IT)
(72) Inventor: Locatelli, Luigi Diano, 24044 Dalmine (BG) (IT); Collarini, Oliviero, 24044 Dalmine (BG) (IT)
(74) Representative: Gatti, Enrico

(56) References cited:
- EP-A- 0 560 715
- DE-C- 317 832
- GB-A- 227 694

## Description

The present invention relates to a lime kiln, more particularly to a parallel flow regenerative kiln and the relative construction method, and still more particularly to the construction of the boundary corner between the upper and lower shafts relative to the process gas venting area.

A regenerative kiln is composed mainly of two upper shafts in which combustion takes place, and two lower shafts in which the product is cooled. In the regenerative kiln the combustion takes place alternately in the two upper shafts continuously.

The limestone is loaded into each shaft and descends along the preheating/regenerative zone in which heat transfer takes place, and arrives in the calcining zone. From there it reaches the cooling zone.

Air is fed into the base of each shaft to cool the lime. The cooling air for the shaft in the combustion state, together with the combustion gases and the carbon dioxide formed by the calcining, flow through the circular interconnection channel between the two side-by-side shafts, with its section obtained by the final corner of the combustion shaft, to pass from one shaft to the other. In this shaft, the gases from the shaft under combustion mix with the cooling air fed into its base and rise to hence heat the mineral in the cooling zone.

Parallel shaft regenerative kilns are known, for example from EP 1 602 889 or EP 0 560 715 A1, comprising a space known as a circular crown to enable the combustion gases to pass from one shaft to the other.

This space is defined by the prolongation of the upper shaft into the lower shaft.

In particular, the outer surface of the lower end of the upper shaft and the inner surface of the upper end of the lower shaft define this space.

This curved prolongation presents shaped refractory elements keyed into each other. During kiln operation, these expand during heating and contract during cooling. As these reactions do not take place uniformly, tensions are created which result in breakage of some elements or form cracks.

Moreover, the prolongation of the upper shaft into the lower shaft corresponds to a suspended internal cylinder, leading to particular constructional complications for its support.

An object of the present invention is to provide a parallel flow regenerative kiln which does not suffer from the drawbacks of the known art.

Another object is to simplify the construction of a kiln of this type.

A further object is to make the most outer constituent corner of the final ring of the upper shaft more robust and resistant to high temperatures, and to the mechanical (abrasive) action of the entering material.

These and further objects are attained according to the present invention by a parallel flow regenerative kiln according to claim 1.

These objects are also attained by a method for constructing a parallel flow regenerative kiln according to claim 7.

Further characteristics of the invention are defined in the dependent claims.

According to the present invention, the gas transfer channel between the side-by-side shafts is formed by the difference between the diameter of the shafts and by the natural slope produced by the material landslip angle, so eliminating the need for a protuberance within the lower shaft, with elimination of the relative problems.

Preferably, the difference between the shaft diameters is greater than in the case of kilns of the known art.

For insulating the shell, already formed bricks are installed, so eliminating special fixings and providing simple guide tracks on which to place the bricks provided with appropriate rings.

As a consequence of the present invention, the installation and drying procedures are simplified.

Internal reinforcements are eliminated, as is the special equipment necessary in the known art, which in any event has to be removed before kiln start-up and is not used again.

By virtue of this refractory brick coupling system, kiln maintenance operations are also facilitated.

The characteristics and advantages of the present invention will be apparent from the ensuing detailed description of one embodiment thereof, illustrated by way of non-limiting example in the accompanying drawings, in which:
Figure 1 is a schematic view of a parallel flow regenerative kiln according to the present invention;
Figure 2 is a schematic top sectional view of a parallel flow regenerative kiln according to the present invention;
Figure 3 shows schematically a detail of the ring of a parallel flow regenerative kiln according to the present invention;
Figure 4 shows schematically the connection zone between the upper shafts and the lower shafts, according to the present invention

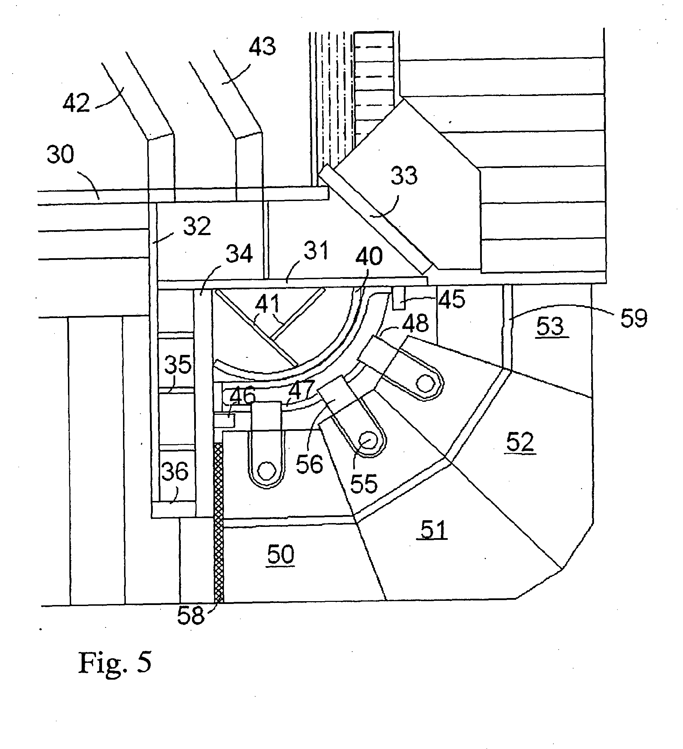

Figure 5 shows schematically a detail of a corner of a parallel flow regenerative kiln according to the present invention.

With reference to the accompanying figures, a parallel flow regenerative kiln according to the present invention comprises a first upper shaft 10 connected to a respective first lower shaft 11.

To the side of and connected to these two shafts, the kiln comprises a second upper shaft 12 connected to a respective second lower shaft 13.

The gases generated by combustion pass from the first shafts to the second shafts through a circular crown 14 formed within the area in which the upper shafts 10 and 12 join the lower shafts 11 and 13.

As can be seen from the figures, no prolongation of the upper shafts 10 and 12 into the lower shafts 11 and 13 is present.

The upper shafts 10 and 12 each have a ring 16 positioned at their lower end, and the lower shafts 11 and 13 each have a ring 16 positioned at their upper end. The lower ring 15 and the upper ring 16 are connected together substantially horizontally by a horizontal structure 18 (ceiling) comprising refractory material.

The lower ring 15 corresponds to the lower end of the upper shaft 10, 12, this latter not extending below the upper ring 16. The rings 15 and 16 are joined together only by the horizontal structure 18.

The circular crown 14 is created by virtue of the rest angle of the material, shown in the figures by the lines 17. When the material descends into the lower shaft, given that the lower shafts 11 and 13 have a dimension greater than that of the upper shafts 10 and 12, it rests and its level increases to form a conical mass until it reaches the rest angle of the material introduced, defined by the line 17, where the combustion-generated gases pass from the surface to the second shafts via the circular crown 14, which is formed.

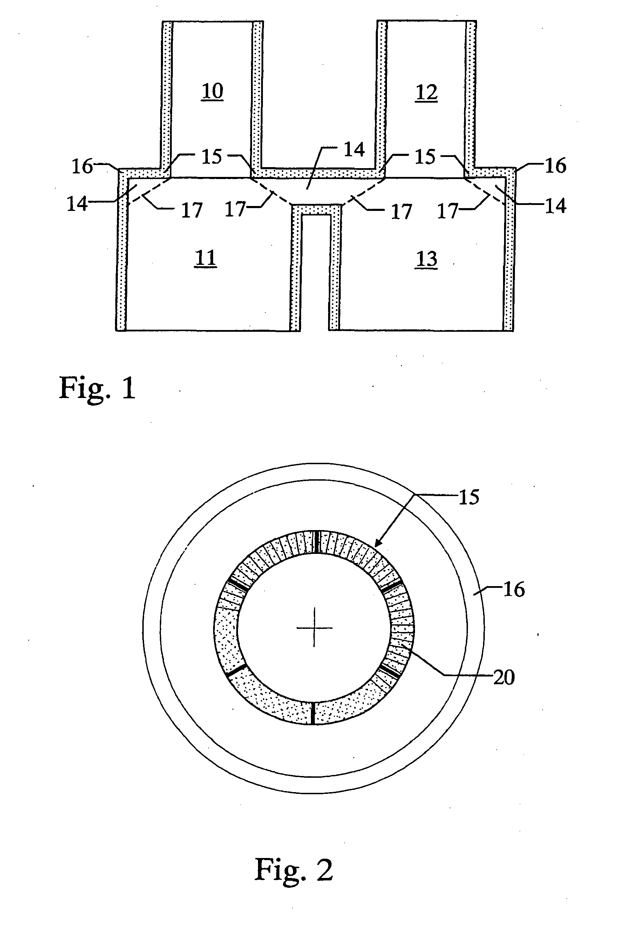

The circular crown 14 is therefore bounded upperly by the structure 18 (ceiling), laterally and externally by the ring 16, and internally by the line 17. A crown 14 is created having a triangular cross-section as can be seen from Figure 1.

To form a circular crown able to transfer the generated gases, an area of suitable dimensions is required. In the case of the known art, the area is determined by the prolongation of the upper shaft into the lower shaft. In the present case, as there is no prolongation, it is preferable to provide a lower shaft of greater dimensions than the known art.

Specifically, the distance between the inner surface of the upper shafts 10 and 12 and the inner surface of the lower shafts 11 and 13 is for example equal to about 2.15 metres for a kiln having a lower shaft diameter between 8 and 9 metres.

On other words, the diameter of the lower shaft is greater than the diameter of the upper shaft by 50%, and more preferably by about 100% or more.

According to a variant of the present invention, the structure 18 can be formed of lesser thickness, by providing a cut-out 19 in its lower part. In this manner the venting area for the process gases can be further increased.

During kiln operation, because of the effect of the combustion gases, the corner of the ring 15, positioned at the lower end of the shafts 10 and 12, expands outwards to produce a pressure. Part of this pressure is absorbed by the joints provided for the constituent sections of the ring and part is opposed by the corner structure designed for this purpose. In contrast, during kiln cooling, gaps can form because of contraction, and if not cleaned they fill with dust such that on again heating the kiln they oppose correct thermal expansion, with resultant increase in the pressure on the corner structure counteracting the ring and on the refractory elements themselves.

After a number of repetitive heating and cooling processes, the impeded expansion can result in breakage of the refractory elements, with the need to immediately replace the components.

To limit and prevent the aforedescribed problems, a solution has been studied which forms the ring 15 in several sections 20. Each section 20 of the terminal ring 15 is composed of blocks of refractory elements 21 and 22 joined together such that the expansion/contraction joints are limited to the number of constituent sections 20 of the refractory ring.

In one embodiment, the ring 15 is made in six sections 20. The number of sections 20 can vary depending on the diameter of the ring 15.

The end ring 15 of the upper shafts 10 and 12 of the kiln is made in various sectors 20, each composed in their turn of misshapen blocks (wedges) 22 (in the form of a rectangular or square based truncated pyramid) and of straight blocks 21 (of parallelepiped shape).

On the sides of each constituent brick the blocks 21 and 22 are provided with male and female guide tongues 59, both to facilitate assembly and to counteract any infiltration of exhaust gases behind the wall, with consequent damage to the insulating refractory lining.

The particular shape of the blocks 21 and 22 means that to assemble the entire ring or a part of it, it is not necessary, as in common practice, to make rear openings in the metal backing structure, but instead they can be mounted directly from the inside, and moreover the entire ring or part of it can be demounted and remounted without having to disturb the integrity of the metal corner structure, so ensuring its life.

The blocks 21 and 22 used to form each of the six sections 20 are fixed together by a mortar able to securely "cement" the adjacent bricks together and create each section as a single block, without any expansion joint between them.

The mortar used is for example of the type known as KXXR or AGXR mortar, marketed by the Refratechnik Company.

The expansion joints, of predefined length and filled with mortar as in the known art, are present only between the various sections 20, these hence being the only expansion points.

To form the corner of the ring 15, the preferable choice was to use four blocks positioned in a vertical plane, and virtually superposed. However the number used can be from one to more than one, while always maintaining the same support structure.

The corner of the ring 15 comprises a metal (steel) structure known as the corner structure, which has the double purpose of withstanding and at the same time counteracting the thermal expansion of the refractory ring. In a preferred embodiment of the invention, the corner structure is divided in its cross-section by various chambers such that these are traversed by a controlled air or aeriform flow along paths of variable section and length.

The corner structure comprises a first horizontal metal structure 30 fixed to the metal structure external to the shafts.

A second horizontal metal element 31, below the first, is connected to the first element 30 by a vertical third metal element 32.

A metal angle element 33, inclined by about 45°, connects the left end of the horizontal elements 30 and 31 together. This element 33 supports the refractory blocks placed above it.

Fixed below the second horizontal element 31 and parallel to the vertical third element 32, there is a fourth vertical metal element 34 spaced from the third vertical element 32 by a series of horizontal metal baffles 35 and closed at its lower end by the final horizontal metal baffle 36. These baffles form communicating chambers between the elements 32 and 34.

Between the fourth vertical element 34 and the second horizontal element 31 there is a curved metal element 40, of which the inner space between the two aforesaid elements is divided by baffles 41 preferably positioned 90° apart and forming chambers communicating with each other and with the chambers formed by the baffles 35.

The first element 30 comprises two holes to which an inlet conduit 42 and an outlet conduit 43 are connected to enable the aeriform to transfer between the various chambers formed within the metal corner structure.

Two metal stops 45 and 46 are positioned outside the curved element 40 in the vicinity of the outer ends of the elements 31 and 34. A curved metal guide 47 having a free end 48 is fixed to these stops. The guide 47 extends within a vertical plane, the free end 48 lying at its upper end. In particular, the guide 47 is in the form of an H-shaped bar positioned with its two parallel arms in a horizontal position and its central rod in a horizontal position.

The guide 47 is fixed at one end between the (upper) metal stop 45 and the horizontal element 31, its other end being fixed between the (lower) metal stop 46 and the vertical element 34. The H-shaped bar of the guide 47 lacks one of the two arms of the H (that towards the kiln interior) in the portion forming the end 48 close to the stop 45, for a prefixed minimum length, to leave a space between the free end 48 and the stop 45.

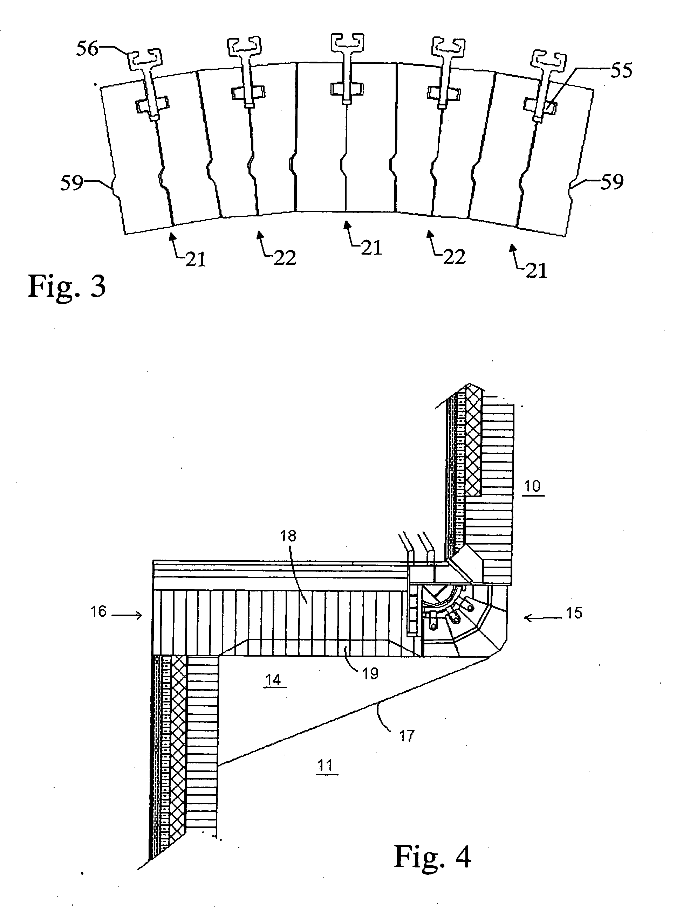

The blocks 50-53, seen laterally in Figure 4, have a shape (square or rectangular based truncated pyramid, possibly different from each other) which enables the corner of the ring 15 to be formed. They each comprise, in proximity to their upper end, a support 55 which penetrates only partially into the blocks (specifically into the interior of each pair of side-by-side blocks, which are then cemented together) to which a piece of C-shaped bar 56 is connected external to the blocks, with the aperture of the C facing upwards to behave as a coupling element, to be able to be coupled to the H-shaped guide 47.

The blocks 50-52 can be connected to the guide 47 by other technical solutions, for example a metal pin with a ring fixed thereto can be used, passing into the block.

The coupling element formed from the C-shaped bar 56 can be slid over the curved guide 47 from its free end 48 where part of the H is missing, and then slid downwards while coupling onto the guide 47. The blocks 50-52 are inserted one after the other and hence remain fixed.

That block 53 positioned in proximity to the element 31 does not comprise the coupling systems of the other blocks, it being fixed as a normal wedge and initially maintained in position by the lateral guide tongues 59.

The block 50, positioned at the other end to the block 53, is close to the vertical metal element 34, but an expansion joint 58 is interposed between them.

The blocks 50-53 are previously formed using shaped refractory bricks. The shaped bricks are formed with determined characteristics guaranteed by the manufacturer. For example, the bricks manufactured by the Refratechnik Company or by the most well-known companies of the sector can be used.

With this preferred solution, using shaped bricks, the kiln preheating and start-up can be carried out without the costly and delicate pre-drying of the concrete masses which are known to require well controlled lengthy times and gradients.

According to another embodiment of the corner structure, instead of fixing refractory bricks to the aforedescribed metal structure, preformed refractory concrete blocks fired by the supplying company can be fixed thereto.

The preformed blocks are prepared with the refractory fixings already incorporated into each of the pieces such that the piece is supported by these once installed and held by the guide connected to the metal structure of the kiln shell.

According to a further embodiment of the corner structure, instead of fixing refractory bricks to the aforesaid metal structure, preformed refractory concrete blocks fired by the supplier can be fixed thereto.

The preformed blocks are prepared with the refractory fixings already incorporated in each of the pieces such that the piece is supported thereby once installed and held by the guide connected to the metal structure of the kiln shell.

According to a further embodiment of the corner structure, concrete blocks are fixed to the aforesaid metal structure. These are cast in situ including the fixings which are previously welded to the metal structure (curved metal element 40) so that the curved metal guide 47 is not required.

The refractory corner ring uses the already described corner structure.

The ring is made in several sections checking that the concrete has properly set before casting the adjacent sections.

Each ring section requires for its preparation previously prepared forms, the casting fixings being welded to the corner structure in situ. These fixings are of various shapes and lengths.

When each individual portion has been installed, it is supported by the metal structure.

In this case the installation must be carried out by qualified personnel who check the correct preparation of the concrete to ensure a good final result. Moreover, the physico-chemical properties of the raw materials are an important assumption for the proper success of the shaft corner.

The materials used and the dimensions can be chosen at will according to requirements and to the state of the art. The parallel flow regenerative kiln conceived in this manner is susceptible to numerous modifications and variants, all falling within the scope of the inventive concept; moreover, all details can be replaced by technically equivalent elements.

## Claims

1. A lime kiln comprising: a first (10) and a second (12) upper shaft; a first (11) and a second (13) lower shaft; said upper shafts (10, 12) being connected respectively to said lower shafts (11, 13); said upper shafts (10, 12) each having a lower ring (15) and said lower shafts (11, 13) each having an upper ring (16); said lower shafts (11, 13) have a dimension greater than that of said upper shaft (10, 12); **characterised in that** said lower ring (15) and said upper ring (16) are connected together by a horizontal structure (18), and **in that** said upper shafts (10, 12) do not extend into the interior of said lower shafts (11, 13); the gases generated by combustion passing from said first shafts (10, 11) to said second shafts (12, 13) through a circular crown (14) formed within the area in which said lower ring (15) joins said upper ring (16) and defined by the rest angle of the material introduced; said kiln comprises a plurality of horizontally aligned refractory bricks (21, 22) alternately comprising square or rectangular based elements of truncated pyramid shape (22) and elements of parallelepiped shape (21); and a plurality of vertically aligned refractory elements (50-53), each of said plurality of refractory elements (50-53) comprising a coupling element (56) in proximity to an end thereof, said kiln comprising a metal corner structure including a guide (47) positioned in a vertical plane to cooperate with said coupling element (56); said metal corner structure comprises a plurality of communicating chambers connected to inlet (42) and outlet (43) conduits to enable an aeriform to transfer between said plurality of communicating chambers.

2. A kiln as claimed in claim 1, **characterised in that** the diameter of the lower shaft (11, 13) is greater than the diameter of the upper shaft (10, 12) by 50%.

3. A kiln as claimed in claim 1, **characterised in that** said kiln is a parallel flow regenerative kiln.

4. A kiln as claimed in claim 1, **characterised in that** said lower ring, **in that** part thereof internal to said upper shafts, is made of a plurality of refractory brick sections (20).

5. A kiln as claimed in claim 1 , **characterised in that** said guide (47) comprises a bar H-shaped and said coupling element (56) comprises a bar C-shaped attached to a support which penetrates partially within said plurality of refractory elements (50-53).

6. A kiln as claimed in claim 1, **characterised in that** said plurality of horizontally aligned refractory bricks (21, 22) forming part of a section (20) are cemented together.

7. A method for constructing a parallel flow regenerative kiln comprising a first (10) and a second upper (12) shaft and a first (11) and a second (13) lower shaft, comprising the steps of connecting said upper shafts (10, 12) to said lower shafts (11, 13) without the presence of extensions of said upper shafts (10, 12) into said lower shafts (11, 13), wherein said upper shafts (10, 12) each having a lower ring (15) and said lower shafts (11, 13) each having an upper ring (16); and of creating a circular crown (14) where the gases generated by combustion pass from said first shafts (10, 11) to said second shafts (12, 13), and which is defined by the area in which said lower ring (15) joins said upper ring (16) and by the rest angle of the material introduced; providing a plurality of horizontally aligned refractory bricks (21, 22) alternately comprising square or rectangular based elements of truncated pyramid shape (22) and elements of parallelepiped shape (21); and providing a plurality of vertically aligned refractory elements (50-53), each of said plurality of refractory elements (50-53) comprising a coupling element (56) in proximity to an end thereof, said kiln comprising a metal comer structure including a guide (47) positioned in a vertical plane to cooperate with said coupling element (56); and providing in said metal corner structure a plurality of communicating chambers connected to inlet (42) and outlet (43) conduits to enable an aeriform to transfer between said plurality of communicating chambers.

## Patentansprüche

1. Kalkofen mit: einem ersten (10) und einem zweiten (12) oberen Schacht; einem ersten (11) und einem zweiten (13) unteren Schacht; wobei die oberen Schächte (10, 12) jeweils mit den unteren Schächten (11, 13) verbunden sind; die oberen Schächte (10, 12) jeweils einen unteren Ring (15) haben und die unteren Schächte (11, 13) jeweils einen oberen Ring (16) haben; die unteren Schächte (11, 13) eine Abmessung haben, die größer ist als die der oberen Schächte (10, 12); **dadurch gekennzeichnet, dass** der untere Ring (15) und der obere Ring (16) durch eine horizontale Struktur (18) miteinander verbunden sind und dass sich die oberen Schächte (10, 12) nicht in das Innere der unteren Schächte (11, 13) erstrecken; die Gase, die durch Verbrennung erzeugt werden, von den ersten Schächten (10, 11) zu den zweiten Schächten (12, 13) geleitet werden, und zwar durch eine kreisförmige Krone (14), die in dem Gebiet gebildet ist, in dem der untere Ring (15) mit dem oberen Ring (16) zusammentrifft, und die durch den Ruhewinkel des eingeleiteten Materials definiert ist; der Ofen eine Mehrzahl von horizontal ausgerichteten feuerfesten Steinen (21, 22), die abwechselnd quadratische oder rechteckige Basiselemente mit Pyramidenstumpf-Form (22) sowie Elemente mit Quader-Form (21) enthalten; und eine Mehrzahl von vertikal ausgerichteten feuerfesten Elementen (50-53) aufweist, wobei jedes der Mehrzahl von feuerfesten Elementen (50-53) ein Kopplungselement (56) nahe einem Ende davon aufweist, der Ofen eine Metalleckenstruktur aufweist, die eine Führung (47) hat, die sich in einer vertikalen Ebene befindet, um mit dem Kopplungselement (56) zusammenzuwirken; die Metalleckenstruktur eine Mehrzahl von kommunizierenden Kammern aufweist, die mit Einlassleitungen (42) und Auslassleitungen (43) verbunden sind, um zu ermöglichen, dass ein Gas zwischen der Mehrzahl von kommunizierenden Kammern übertragen werden kann.

2. Ofen nach Anspruch 1, **dadurch gekennzeichnet, dass** der Durchmesser der unteren Schächte (11, 13) um 50% größer ist als der Durchmesser der oberen Schächte (10, 12).

3. Ofen nach Anspruch 1, **dadurch gekennzeichnet, dass** der Ofen ein Parallelströmungs-Regenerativ-Ofen ist.

4. Ofen nach Anspruch 1, **dadurch gekennzeichnet, dass** der untere Ring, von dem sich ein Teil im Inneren der oberen Schächte befindet, aus einer Mehrzahl von feuerfesten Steinabschnitten (20) gebildet ist.

5. Ofen nach Anspruch 1, **dadurch gekennzeichnet, dass** die Führung (47) eine H-förmige Stange aufweist und das Kopplungselement (56) eine C-förmige Stange aufweist, die an einer Halterung angebracht ist, die teilweise in die Mehrzahl von feuerfesten Elementen (50-53) eingebracht ist.

6. Ofen nach Anspruch 1, **dadurch gekennzeichnet, dass** die Mehrzahl von horizontal ausgerichteten feuerfesten Steinen (21, 22), die einen Teil von einem Abschnitt (20) bilden, miteinander zementiert sind.

7. Verfahren zum Herstellen eines Parallelströmungs-Regenerativ-Ofens, der einen ersten (10) und einen zweiten (12) oberen Schacht sowie einen ersten (11) und einen zweiten (13) unteren Schacht aufweist, mit den Schritten: Verbinden der oberen Schächte (10, 12) mit den unteren Schächten (11, 13), ohne dass sich die oberen Schächte (10, 12) in die unteren Schächte (11, 13) erstrecken, wobei die oberen Schächte (10, 12) jeweils einen unteren Ring (15) haben und die unteren Schächte (11, 13) jeweils einen oberen Ring (16) haben; und Erzeugen einer kreisförmigen Krone (14), wobei die durch Verbrennung erzeugten Gase von den ersten Schächten (10, 11) zu den zweiten Schächten (12, 13) geleitet werden, und die durch das Gebiet, in dem der untere Ring (15) mit dem oberen Ring (16) zusammentrifft, und durch den Ruhewinkel des eingeleiteten Materials gebildet ist; Bereitstellen einer Mehrzahl von horizontal ausgerichteten feuerfesten Steinen (21, 22), die abwechselnd quadratische oder rechteckige Basiselemente mit Pyramidenstumpf-Form (22) sowie Elemente mit Quader-Form (21) enthalten; und Bereitstellen einer Mehrzahl von vertikal ausgerichteten feuerfesten Elementen (50-53), wobei jedes der Mehrzahl von feuerfesten Elementen (50-53) ein Kopplungselement (56) nahe einem Ende davon aufweist, wobei der Ofen eine Metalleckenstruktur aufweist, die eine Führung (47) hat, die sich in einer vertikalen Ebene befindet, um mit dem Kopplungselement (56) zusammenzuwirken; und Bereitstellen, in der Metalleckenstruktur, einer Mehrzahl von kommunizierenden Kammern, die mit Einlassleitungen (42) und Auslassleitungen (43) verbunden sind, um zu ermöglichen, dass ein Gas zwischen der Mehrzahl von kommunizierenden Kammern übertragen werden kann.

## Revendications

1. Four à chaux comprenant : un premier (10) et un second (12) puits supérieur ; un premier (11) et un second (13) puits inférieur ; les puits supérieurs (10, 12) étant reliés respectivement aux puits inférieurs (11, 13) et les puits supérieurs (10, 12) ayant chacun un anneau inférieur (15) et les puits inférieurs (11, 13) ayant chacun un anneau supérieur (16) ; les puits inférieurs (11, 13) ont une dimension plus grande que celle des puits supérieurs (10, 12) ; **caractérisé en ce que** l'anneau inférieur (15) et l'anneau supérieur (16) sont reliés ensemble par une structure horizontale (18), et **en ce que** les puits supérieurs (10, 12) ne s'étendent pas à l'intérieur des puits inférieurs (11, 13) ; les gaz produits par la combustion passant des premiers puits (10, 11) vers les seconds puits (12, 13) à travers une couronne circulaire (14) formée dans la zone dans laquelle l'anneau inférieur (15) rejoint l'anneau supérieur (16) et définie par l'angle de repos du matériau introduit ; le four comprend plusieurs briques réfractaires alignées horizontalement (21, 22) comprenant alternativement des éléments de base carrée ou rectangulaire de forme pyramidale tronquée (22) et des éléments de forme parallélépipédique (21) ; et plusieurs éléments réfractaires alignés verticalement (50 à 53) chacun des plusieurs éléments réfractaires (50 à 53) comprenant un élément de liaison (56) à proximité d'une extrémité de celui-ci, le four comprenant une structure de coin métallique comprenant un guide (47) positionné dans un plan vertical pour coopérer avec l'élément de liaison (56) ; la structure de coin métallique comprend plusieurs chambres communicantes reliées à des conduits d'entrée (42) et de sortie (43) pour permettre de transférer un produit gazeux entre les plusieurs chambres communicantes.

2. Four selon la revendication 1, **caractérisé en ce que** le diamètre du puits inférieur (11, 13) est plus grand que le diamètre du puits supérieur (10, 12), de 50 %.

3. Four selon la revendication 1, **caractérisé en ce que** le four est un four de régénération à écoulement parallèle.

4. Four selon la revendication 1, **caractérisé en ce que** l'anneau inférieur, dans la partie de celui-ci située à l'intérieur des puits supérieurs, est constitué de plusieurs tronçons de briques réfractaires (20).

5. Four selon la revendication 1, **caractérisé en ce que** le guide (47) comprend une barre en forme de H et les éléments de liaison (56) comprennent une barre en forme de C fixée sur un support qui pénètre partiellement dans les plusieurs éléments réfractaires (50 à 53).

6. Four selon la revendication 1, **caractérisé en ce que** les plusieurs briques réfractaires alignées horizontalement (21, 22) formant une partie d'un tronçon (20) sont cimentées ensemble.

7. Procédé pour construire un four de régénération a écoulement parallèle comprenant un premier (10) et un second (12) puits supérieur et un premier (11) et un second (13) puits inférieur, comprenant les étapes consistant à relier les puits supérieurs (10, 12) aux puits inférieurs (11, 13) sans la présence de prolongements des puits supérieurs (10, 12) dans les puits inférieurs (11, 13), les puits supérieurs (10, 12) ayant chacun un anneau inférieur (15) et les puits inférieurs (11, 13) ayant chacun un anneau supérieur (16) ; et créer une couronne circulaire (14) où les gaz produits par la combustion passent depuis les premiers puits (10, 11) vers les seconds puits (12,13), et qui est définie par la zone dans laquelle l'anneau inférieur (15) rejoint l'anneau supérieur (16) et par l'angle de repos du matériau introduit ; fournir plusieurs briques réfractaires alignées horizontalement (21, 22) comprenant alternativement des éléments de base carrée ou rectangulaire de forme pyramidale tronquée (22) et des éléments de forme parallélépipédique (21) ; et fournir plusieurs éléments réfractaires alignés verticalement (50 à 53), chacun des plusieurs l'éléments réfractaires (50 à 53) comprenant un élément de liaison (56) à proximité d'une extrémité de celui-ci, le four comprenant une structure de coin métallique comprenant un guide (47) positionné dans un plan vertical pour coopérer avec l'élément de liaison (56) ; et fournir dans la structure de coin métallique plusieurs chambres communicantes reliées à des conduits d'entrée (42) et de sortie (43) pour permettre de transférer un produit gazeux entre les plusieurs chambres communicantes.
